(19) Europäisches Patentamt
European Patent Office
Office européen des brevets

(11) **EP 3 076 748 A1**

(12) **EUROPEAN PATENT APPLICATION**
published in accordance with Art. 153(4) EPC

(43) Date of publication:
**05.10.2016  Bulletin 2016/40**

(51) Int Cl.:
***H04W 88/04*** (2009.01)

(21) Application number: **14878263.4**

(86) International application number:
**PCT/CN2014/070218**

(22) Date of filing: **07.01.2014**

(87) International publication number:
**WO 2015/103728 (16.07.2015 Gazette 2015/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **ZHANG, Lei**
**Shenzhen**
**Guangdong 518129 (CN)**

• **WANG, Yi**
**Shenzhen**
**Guangdong 518129 (CN)**
• **CHEN, Dageng**
**Shenzhen**
**Guangdong 518129 (CN)**

(74) Representative: **Kreuz, Georg Maria**
**Huawei Technologies Duesseldorf GmbH**
**Riesstrasse 8**
**80992 München (DE)**

(54) **COOPERATIVE COMMUNICATION METHOD, APPARATUS AND SYSTEM FOR USER EQUIPMENT**

(57)  The present invention provides a method, an apparatus, and a system for collaborative communication between user equipments. The method for collaborative communication between user equipments in the present invention includes: receiving, by a network device, a collaboration request sent by first user equipment; determining, according to the collaboration request, at least one second user equipment that collaborates with the first user equipment in receiving first downlink data; and sending a first indication message to the first user equipment, where the first indication message is used to indicate the first user equipment to receive a first part of the first downlink data from the network device and receive a second part of the first downlink data from the second user equipment. According to embodiments of the present invention, user equipment can obtain a diversity gain or a multiplexing gain.

FIG. 1

**Description**

**TECHNICAL FIELD**

The present invention relates to the field of communications technologies, and in particular, to a method, an apparatus, and a system for collaborative communication between user equipments.

**BACKGROUND**

Multiple-input multiple-output MIMO is a technology in a multi-antenna wireless communications system. In MIMO, multiple antennas can be used at a transmit end to separately and independently send signals, and multiple antennas are used at a receive end to receive and restore original information sent at the transmit end. This technology has very good effects in suppressing channel fading, implementing spatial multiplexing or transmit diversity, reducing a bit error rate, increasing a transmission rate, and improving transmission quality.

For user equipment UE, increasing a quantity of antennas is also one of important means for improving spectral efficiency and further to increase a system capacity.

In the prior art, because the user equipment is affected by factors such as a volume, channel relevancy, an antenna size, and costs, it is difficult to increase the quantity of antennas of the user equipment. Because performance of spatial multiplexing or transmit diversity is affected by the quantity of antennas, a transmission rate or transmission quality of the user equipment is not high.

**SUMMARY**

Embodiments of the present invention provide a method, an apparatus, and a system for collaborative communication between user equipments, so that user equipment obtains a diversity gain or a multiplexing gain on a premise that a quantity of physical antennas of the user equipment is not increased.

According to a first aspect, an embodiment of the present invention provides a method for collaborative communication between user equipments, including:

receiving, by a network device, a collaboration request sent by first user equipment;
determining, by the network device according to the collaboration request, at least one second user equipment that collaborates with the first user equipment in receiving first downlink data; and
sending, by the network device, a first indication message to the first user equipment, where the first indication message is used to indicate the first user equipment to receive a first part of the first downlink data from the network device and receive a second part of the first downlink data from the second user equipment.

With reference to the first aspect, in a first implementation manner of the first aspect, after the determining, by the network device according to the collaboration request, at least one second user equipment that collaborates with the first user equipment in receiving first downlink data, the method further includes:

sending, by the network device, a second indication message to the second user equipment, where the second indication message is used to indicate the second user equipment to forward the second part, received from the network device, of the first downlink data to the first user equipment.

With reference to the first aspect or the first implementation manner, in a second implementation manner of the first aspect, the method further includes:

determining, by the network device, second downlink data to be sent to the second user equipment;
determining, by the network device, that the first user equipment collaborates with the second user equipment in receiving the second downlink data; and
sending, by the network device, a third indication message to the second user equipment, where the third indication message is used to indicate the second user equipment to receive a first part of the second downlink data from the network device and receive a second part of the second downlink data from the first user equipment.

With reference to the second implementation manner, in a third implementation manner of the first aspect, after the determining, by the network device, that the first user equipment collaborates with the second user equipment in receiving the second downlink data, the method further includes:

sending, by the network device, a fourth indication message to the first user equipment, where the fourth indication message is used to indicate the first user equipment to forward the second part, received from the network device, of the second downlink data to the second user equipment.

With reference to the second implementation manner, in a fourth implementation manner of the first aspect, the determining, by the network device, that the first user equipment collaborates with the second user equipment in receiving the second downlink data specifically includes:

determining, by the network device, whether communication quality of the first user equipment and communication quality of the second user equipment satisfy a preset threshold in a case in which the second user equipment collaborates with the first user equipment in receiving the first downlink data and the first user equipment collaborates with the second user equipment in receiving the second downlink data; and
if the preset threshold is satisfied, determining, by the network device, that the first user equipment collaborates with the second user equipment in receiving the second downlink data.

With reference to the first aspect or any one of the first implementation manner to the fourth implementation manner, in a fifth implementation manner of the first aspect, after the determining, by the network device according to the collaboration request, at least one second user equipment that collaborates with the first user equipment in receiving first downlink data, the method further includes:

sending, by the network device, a first cell radio network temporary identifier C-RNTI to each second user equipment, so that each second user equipment demodulates control information of the first downlink data according to the first C-RNTI; or
sending, by the network device, the first C-RNTI to at least any one of the second user equipments, so that all the second user equipments share the first C-RNTI.

With reference to the fifth implementation manner, in a sixth implementation manner of the first aspect, the first C-RNTI is a C-RNTI of the first user equipment or a C-RNTI of the second user equipment or a preset C-RNTI.
With reference to the second implementation manner, in a seventh implementation manner of the first aspect, after the determining, by the network device, that the first user equipment collaborates with the second user equipment in receiving the second downlink data, the method further includes:

sending, by the network device, a second C-RNTI to the first user equipment, so that the first user equipment demodulates control information of the second downlink data according to the second C-RNTI.

With reference to the seventh implementation manner, in an eighth implementation manner of the first aspect, the second C-RNTI is a C-RNTI of the second user equipment or a C-RNTI of the first user equipment or a preset C-RNTI.
With reference to the first aspect or any one of the first implementation manner to the eighth implementation manner, in a ninth implementation manner of the first aspect, the first part of the first downlink data and the second part of the first downlink data are the same, or the first part of the first downlink data and the second part of the first downlink data are different.
According to a second aspect, an embodiment of the present invention provides a method for collaborative communication between user equipments, including:

sending, by first user equipment, a collaboration request to a network device;
receiving, by the first user equipment, a first indication message sent by the network device, where the first indication message is used to indicate the first user equipment to receive a first part of the first downlink data from the network device and receive a second part of the first downlink data from second user equipment; and
receiving, by the first user equipment, the first part, sent by the network device, of the first downlink data, and receiving the second part of the first downlink data from the second user equipment.

With reference to the second aspect, in a first implementation manner of the second aspect, the method further includes:

receiving, by the first user equipment, a fourth indication message sent by the network device, where the fourth indication message is used to indicate the first user equipment to forward a second part, received from the network device, of second downlink data to the second user equipment.

With reference to the second aspect, in a second implementation manner of the second aspect, the method further includes:

negotiating, by the first user equipment, with the second user equipment, so that the first user equipment receives a second part of second downlink data from the network device and forwards the second part of the second downlink data to the second user equipment.

With reference to the first implementation manner or the second implementation manner, in a third implementation manner of the second aspect, the method further includes:

receiving, by the first user equipment, the second part, sent by the network device, of the second downlink data; and sending, by the first user equipment, the second part of the second downlink data to the second user equipment.

With reference to the third implementation manner, in a fourth implementation manner of the second aspect, after the sending, by first user equipment, a collaboration request to a network device, the method further includes:

receiving, by the first user equipment, a second C-RNTI sent by the network device; and demodulating, by the first user equipment, control information of the second downlink data according to the second C-RNTI.

With reference to the fourth implementation manner, in a fifth implementation manner of the second aspect, the second C-RNTI is a C-RNTI of the second user equipment or a C-RNTI of the first user equipment or a preset C-RNTI.
With reference to the second aspect or any one of the first implementation manner to the fifth implementation manner, in a sixth implementation manner of the second aspect, the method further includes:

negotiating, by the first user equipment, with the second user equipment, so that the second user equipment receives the second part of the first downlink data from the network device and forwards the second part of the first downlink data to the first user equipment.

According to a third aspect, an embodiment of the present invention provides a method for collaborative communication between user equipments, including:

receiving, by second user equipment, a second part, sent by a network device, of first downlink data, where a first part of the first downlink data is sent by the network device to first user equipment; and forwarding, by the second user equipment, the second part of the first downlink data to the first user equipment.

With reference to the third aspect, in a first implementation manner of the third aspect, before the receiving, by second user equipment, a second part, sent by a network device, of first downlink data, the method further includes:

receiving, by the second user equipment, a second indication message sent by the network device, where the second indication message is used to indicate the second user equipment to forward the second part, received from the network device, of the first downlink data to the first user equipment.

With reference to the first implementation manner, in a second implementation manner of the third aspect, before the receiving, by second user equipment, a second part, sent by a network device, of first downlink data, the method further includes:

negotiating, by the second user equipment, with the first user equipment, so that the second user equipment receives the second part of the first downlink data from the network device and forwards the second part of the first downlink data to the first user equipment.

With reference to the third aspect or the first implementation manner or the second implementation manner, in a third implementation manner of the third aspect, before the receiving, by second user equipment, a second part, sent by the network device, of the first downlink data, the method further includes:

receiving, by the second user equipment, a first cell radio network temporary identifier C-RNTI sent by the network device; and demodulating, by the second user equipment, control information of the first downlink data according to the first C-RNTI.

With reference to the fourth implementation manner, in a fifth implementation manner of the third aspect, the second user equipment is main user equipment among all user equipments that collaborate with the first user equipment in receiving the first downlink data, and before the receiving, by second user equipment, a second part, sent by the network device, of the first downlink data, the method further includes:

receiving, by the second user equipment, the first C-RNTI sent by the network device; and
demodulating, by the main user equipment, the control information of the first downlink data according to the first C-RNTI.

With reference to the fourth implementation manner or the fifth implementation manner, in a sixth implementation manner of the third aspect, the first C-RNTI is a C-RNTI of the first user equipment or a C-RNTI of the second user equipment or a preset C-RNTI.

With reference to the third aspect or any one of the first implementation manner to the sixth implementation manner, in a seventh implementation manner of the third aspect, the method further includes:

receiving, by the second user equipment, a third indication message sent by the network device, where the third indication message is further used to indicate the second user equipment to receive a first part of second downlink data from the network device and receive a second part of the second downlink data from the first user equipment.

With reference to the seventh implementation manner, in an eighth implementation manner of the third aspect, after the receiving, by the second user equipment, a third indication message sent by the network device, the method further includes:

receiving, by the second user equipment, the first part of the second downlink data from the network device, and receiving the second part of the second downlink data from the first user equipment.

With reference to the seventh implementation manner or the eighth implementation manner, in a ninth implementation manner of the third aspect, before the receiving the second part of the second downlink data from the first user equipment, the method further includes:

negotiating, by the second user equipment, with the first user equipment, so that the first user equipment receives the second part of the second downlink data from the network device and forwards the second part of the second downlink data to the second user equipment.

According to a fourth aspect, an embodiment of the present invention provides a network device for collaborative communication between user equipments, including:

a receiving module, configured to receive a collaboration request sent by first user equipment;
a determining module, configured to determine, according to the collaboration request received by the receiving module, at least one second user equipment that collaborates with the first user equipment in receiving first downlink data; and
a sending module, configured to send a first indication message to the first user equipment, where the first indication message is used to indicate the first user equipment to receive a first part of the first downlink data from the network device and receive a second part of the first downlink data from the second user equipment.

With reference to the fourth aspect, in a first implementation manner of the fourth aspect, the sending module is further configured to: send a second indication message to the second user equipment, where the second indication message is used to indicate the second user equipment to forward the second part, received from the network device, of the first downlink data to the first user equipment.

With reference to the fourth aspect or the first implementation manner, in a second implementation manner of the fourth aspect, the determining module is further configured to: after the receiving module receives the collaboration request sent by the first user equipment, determine second downlink data to be sent to the second user equipment; and determine that the first user equipment collaborates with the second user equipment in receiving the second downlink data; and the sending module is further configured to: send a third indication message to the second user equipment, where the third indication message is used to indicate the second user equipment to receive a first part of the second downlink data from the network device and receive a second part of the second downlink data from the first user equipment.

With reference to the second implementation manner, in a third implementation manner of the fourth aspect, the sending module is further configured to: send a fourth indication message to the first user equipment, where the fourth indication message is used to indicate the first user equipment to forward the second part, received from the network device, of the second downlink data to the second user equipment.

With reference to the second implementation manner, in a fourth implementation manner of the fourth aspect, the determining module is specifically configured to: determine whether communication quality of the first user equipment and communication quality of the second user equipment satisfy a preset threshold in a case in which the second user equipment collaborates with the first user equipment in receiving the first downlink data and the first user equipment collaborates with the second user equipment in receiving the second downlink data; and if the preset threshold is satisfied, the network device determines that the first user equipment collaborates with the second user equipment in receiving the second downlink data.

With reference to the fourth aspect or any one of the first implementation manner to the fourth implementation manner, in a fifth implementation manner of the fourth aspect, the sending module is further configured to: after the determining module determines, according to the collaboration request, the at least one second user equipment that collaborates with the first user equipment in receiving the first downlink data, send a first cell radio network temporary identifier C-RNTI to each second user equipment, so that each second user equipment demodulates control information of the first downlink data according to the first C-RNTI; or send the first C-RNTI to at least any one of the second user equipments, so that all the second user equipments share the first C-RNTI.

With reference to the fifth implementation manner, in a sixth implementation manner of the fourth aspect, the first C-RNTI is a C-RNTI of the first user equipment or a C-RNTI of the second user equipment or a preset C-RNTI.

With reference to the second implementation manner, in a seventh implementation manner of the fourth aspect, the sending module is further configured to: after the determining module determines that the first user equipment collaborates with the second user equipment in receiving the second downlink data, send a second C-RNTI to the first user equipment, so that the first user equipment demodulates control information of the second downlink data according to the second C-RNTI.

With reference to the seventh implementation manner, in an eighth implementation manner of the fourth aspect, the second C-RNTI is a C-RNTI of the second user equipment or a C-RNTI of the first user equipment or a preset C-RNTI.

With reference to the fourth aspect or any one of the first implementation manner to the eighth implementation manner, in a ninth implementation manner of the fourth aspect, the first part of the first downlink data and the second part of the first downlink data are the same, or the first part of the first downlink data and the second part of the first downlink data are different.

According to a fifth aspect, an embodiment of the present invention provides user equipment, including:

a sending module, configured to send a collaboration request to a network device; and

a receiving module, configured to receive a first indication message sent by the network device, where the first indication message is used to indicate the first user equipment to receive a first part of the first downlink data from the network device; and receive the first indication message sent by the network device, where the first indication message is used to indicate the first user equipment to receive the first part of the first downlink data from the network device, where

the receiving module is further configured to receive the first part, sent by the network device, of the first downlink data, and receive a second part of the first downlink data from second user equipment.

With reference to the fifth aspect, in a first implementation manner of the fifth aspect, the receiving module is further configured to: receive a fourth indication message sent by the network device, where the fourth indication message is further used to indicate the first user equipment to forward a second part, received from the network device, of second downlink data to the second user equipment.

With reference to the fifth aspect, in a second implementation manner of the fifth aspect, the user equipment further includes:

a first negotiation module, configured to negotiate with the second user equipment, so that the first user equipment receives a second part of second downlink data from the network device and forwards the second part of the second downlink data to the second user equipment.

With reference to the first implementation manner or the second implementation manner, in a third implementation manner of the fifth aspect, the receiving module is further configured to: receive the second part, sent by the network device, of the second downlink data after receiving the first indication message sent by the network device; and the sending module is further configured to: after the receiving module receives the second part, sent by the network device, of the second downlink data, send the second part of the second downlink data to the second user equipment.

With reference to the third implementation manner, in a fourth implementation manner of the fifth aspect, the receiving module is further configured to: after the sending module sends the collaboration request to the network device, receive a second cell radio network temporary identifier C-RNTI sent by the network device; and the receiving module is specifically configured to: after the receiving module receives the second C-RNTI sent by the network device, demodulate control information of the second downlink data according to the second C-RNTI.

With reference to the fourth implementation manner, in a fifth implementation manner of the fifth aspect, the second C-RNTI is a C-RNTI of the second user equipment or a C-RNTI of the first user equipment or a preset C-RNTI.

With reference to the fifth aspect or any one of the first implementation manner to the fifth implementation manner, in a sixth implementation manner of the fifth aspect, the user equipment further includes:

a second negotiation module, configured to negotiate with the second user equipment, so that the second user equipment receives the second part of the first downlink data from the network device and forwards the second part of the first downlink data to the first user equipment.

According to a sixth aspect, an embodiment of the present invention provides user equipment, including:

a receiving module, configured to receive a second part, sent by a network device, of first downlink data, where a first part of the first downlink data is sent by the network device to first user equipment; and
a sending module, configured to forward the second part of the first downlink data to the first user equipment.

With reference to the sixth aspect, in a first implementation manner of the sixth aspect, the receiving module is further configured to receive a second indication message sent by the network device, where the second indication message is used to indicate the second user equipment to forward the second part, received from the network device, of the first downlink data to the first user equipment.

With reference to the first implementation manner, in a second implementation manner of the sixth aspect, the user equipment further includes:

a first negotiation module, configured to negotiate with the first user equipment, so that the second user equipment receives the second part of the first downlink data from the network device and forwards the second part of the first downlink data to the first user equipment.

With reference to the sixth aspect or the first implementation manner or the second implementation manner, in a third implementation manner of the sixth aspect, the receiving module is further configured to: before receiving the second part, sent by the network device, of the first downlink data, receive a first cell radio network temporary identifier C-RNTI sent by the network device; and demodulate control information of the first downlink data according to the first C-RNTI.

With reference to the fourth implementation manner, in a fifth implementation manner of the sixth aspect, the first C-RNTI is a C-RNTI of the first user equipment or a C-RNTI of the second user equipment or a preset C-RNTI.

With reference to the fifth implementation manner, in a sixth implementation manner of the sixth aspect, the receiving module is further configured to: receive a third indication message sent by the network device, where the third indication message is further used to indicate the second user equipment to receive a first part of second downlink data from the network device and receive a second part of the second downlink data from the first user equipment.

With reference to the third aspect or any one of the first implementation manner to the sixth implementation manner, in a seventh implementation manner of the third aspect, after the receiving module receives the third indication message sent by the network device, the receiving module is further configured to: receive the first part of the second downlink data from the network device, and receive the second part of the second downlink data from the first user equipment.

With reference to the sixth implementation manner or the seventh implementation manner, in an eighth implementation manner, the user equipment further includes: a second negotiation module, configured to negotiate with the first user equipment, so that the first user equipment receives the second part of the second downlink data from the network device and forwards the second part of the second downlink data to the second user equipment.

According to a seventh aspect, an embodiment of the present invention provides a network device, including: a processor and a memory, where the memory stores an execution instruction, and when the network device runs, the processor communicates with the memory, and the processor executes the execution instruction, so that the base station executes the method according to the first aspect.

According to an eighth aspect, an embodiment of the present invention provides user equipment, including: a processor and a memory, where the memory stores an execution instruction, and when the user equipment runs, the processor communicates with the memory, and the processor executes the execution instruction, so that the user equipment executes the method according to the second aspect.

According to a ninth aspect, an embodiment of the present invention provides user equipment, including: a processor and a memory, where the memory stores an execution instruction, and when the user equipment runs, the processor communicates with the memory, and the processor executes the execution instruction, so that the user equipment executes the method according to the third aspect.

According to a tenth aspect, an embodiment of the present invention further provides a system for collaborative communication between user equipments, including the network device provided in the fourth aspect of the present invention, the first user equipment provided in the fifth aspect, and the second user equipment provided in the sixth aspect.

According to an eleventh aspect, an embodiment of the present invention further provides a system for collaborative communication between user equipments, including the network device provided in the seventh aspect of the present invention, the first user equipment provided in the eighth aspect, and the second user equipment provided in the ninth aspect.

According to the method, the apparatus, and the system for collaborative communication between user equipments provided in the embodiments of the present invention, after receiving a collaboration request of first user equipment, a network device may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of a method for collaborative communication between user equipments according to an embodiment of the present invention;

FIG. 2 is a flowchart of a method for collaborative communication between user equipments according to the another embodiment of present invention;

FIG. 3 is a flowchart of a method for collaborative communication between user equipments according to still another embodiment of the present invention;

FIG. 4 is a schematic diagram of a specific implementation manner in which second user equipment collaborates with first user equipment in receiving first downlink data but the first user equipment does not collaborate with the second user equipment;

FIG. 5 is a schematic diagram of a specific implementation manner in which second user equipment collaborates with first user equipment in receiving first downlink data and the first user equipment collaborates with the second user equipment in receiving second downlink data;

FIG. 6 is a schematic structural diagram of a network device according to an embodiment of the present invention;

FIG. 7 is a schematic structural diagram of user equipment according to an embodiment of the present invention;

FIG. 8 is a schematic structural diagram of user equipment according to another embodiment of the present invention;

FIG. 9 is a schematic structural diagram of user equipment according to still another embodiment of the present invention;

FIG. 10 is a schematic structural diagram of user equipment according to another embodiment of the present invention;

FIG. 11 is a schematic structural diagram of a network device according to another embodiment of the present invention;

FIG. 12 is a schematic structural diagram of user equipment according to still another embodiment of the present invention; and

FIG. 13 is a schematic structural diagram of user equipment according to yet another embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, Wideband Code Division Multiple Access (WCDMA, Wideband Code Division Multiple Access Wireless), a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a general packet radio service (GPRS, General Packet Radio Service) system, a Long Term Evolution (LTE, Long Term Evolution) system, and other communications systems.

User equipment involved in this application may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges language and/or data with the radio access network. For example, the wireless terminal may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

A network device involved in this application may be, for example, a base station or a radio network controller (Radio Network Controller, RNC).

A base station (for example, an access point) may be a base station (BTS, Base Transceiver Station) in GSM or CDMA, may be a base station (NodeB) in WCDMA, or may be an evolved NodeB (NodeB, eNB, or e-NodeB, evolutional Node B) in LTE, which is not limited in the present application.

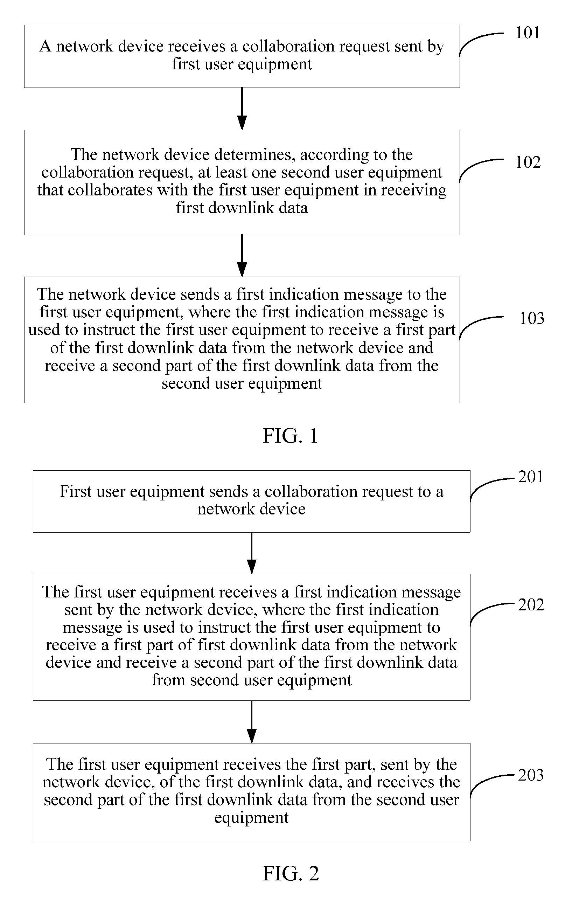

FIG. 1 is a flowchart of a method for collaborative communication between user equipments according to an embodiment of the present invention. As shown in FIG. 1, the method in this embodiment may include:

Step 101: A network device receives a collaboration request sent by first user equipment.
Step 102: The network device determines, according to the collaboration request, at least one second user equipment that collaborates with the first user equipment in receiving first downlink data.
Step 103: The network device sends a first indication message to the first user equipment, where the first indication message is used to indicate the first user equipment to receive a first part of the first downlink data from the network device and receive a second part of the first downlink data from the second user equipment.

The collaboration request may carry an identifier of the first user equipment, to uniquely indicate the first user equipment in a network. In addition, the collaboration request may further carry a parameter such as description information of quality of a link between the first user equipment and the second user equipment.

Optionally, if a downlink quality is not good, a bit error rate when the first user equipment receives downlink data from the network device is higher than a predetermined value, and in this case, the first part and the second part of the first downlink data may be the same; if the downlink quality is good, a bit error rate when the first user equipment receives downlink data from the network device is lower than a predetermined value, and in this case, the first part and the second part of the first downlink data may be different.

In this embodiment of the present invention, there may be one or more second user equipments that collaborate with the first user equipment in receiving the first downlink data. When the network device determines a second user equipment that collaborates with the first user equipment in receiving the first downlink data, the network device may first determine, according to information that is previously reported by the first user equipment or the second user equipment and is about quality of a link between the first and second user equipments, information about quality of a link between the first user equipment and the network device, and information about quality of a link between the second user equipment and the network device, whether the collaboration of the second user equipment with the first user equipment can bring a beneficial effect for the first user equipment, for example, whether a multiplexing gain or diversity gain can be brought for the first user equipment. If the beneficial effect cannot reach a predetermined value, the network device may not select the second user equipment and instead selects another second user equipment to collaborate with the first user equipment.

After determining the second user equipment for collaborating with the first user equipment, the network device may adjust a transmission rate level according to the quality of the link between the first and second user equipments. For example, when the quality of the link between the first and second user equipments is not good, a rate when the second user equipment collaborates with the first user equipment in receiving data is limited, and in this case, rates at which the network device sends the first and second parts of the first downlink data should also be reduced; otherwise, when the second user equipment collaborates with the first user equipment, data cannot be processed in time or sent in time, and finally, collaboration cannot be performed normally. A mapping table about "quality of a link between user equipments-a rate of transmission between user equipments-a data sending rate of the network device-a data sending level of the network device" may be established for the network device, and the network device may select a proper transmission rate level according to the mapping list.

The network device may add an identifier of the second user equipment to the sent first indication message, and may further add information such as a time at which the second user equipment starts to collaborate with the first user equipment, so that the second user equipment can assist more precisely in receiving the downlink data.

As a feasible implementation manner, after determining that the second user equipment collaborates with the first user equipment, the network device may send a second indication message to the second user equipment, where the second indication message is used to indicate the second user equipment to forward the second part, received from the network device, of the first downlink data to the first user equipment.

As another feasible implementation manner, the first user equipment may negotiate with the second user equipment in advance, so that the second user equipment receives the second part of the first downlink data from the network device and forwards the second part of the first downlink data to the first user equipment.

Optionally, after the network device receives the collaboration request sent by the first user equipment, if the network device determines that the second user equipment having second downlink data to be sent, the network device may further determine that the first user equipment collaborates with the second user equipment in receiving the second downlink data. In this implementation scenario, the network device may further send a third indication message to the second user equipment, to indicate the second user equipment to receive a first part of the second downlink data from the network device and receive a second part of the second downlink data from the first user equipment. It should be noted that the second indication message and the third indication message may be a same message, that is, when indicating the second equipment to forward the second part, received from the network device, of the first downlink data to the first user equipment, the network device may also indicate the second user equipment to receive the first part of the second downlink data from the network device and receive the second part of the second downlink data from the first user equipment.

Similar to a scenario in which the second user equipment assists the first user equipment, in a feasible implementation manner, in a scenario in which the first user equipment assists the second user equipment, the network device may further send a fourth indication message to the first user equipment, to indicate the first user equipment to forward the second part, received from the network device, of the second downlink data to the second user equipment. In another feasible implementation manner, the first user equipment may also negotiate with the second user equipment in advance, so that the first user equipment receives the second part of the second downlink data from the network device and forwards the second part of the second downlink data to the second user equipment.

It should be noted that the first indication message and the fourth indication message may also be a same message, that is, when indicating the first device to forward the second part, received from the network device, of the second downlink data to the second user equipment, the network device may also indicate the first user equipment to receive the first part of the first downlink data from the network device and receive the second part of the first downlink data from the second user equipment.

Specifically, the network device may determine whether communication quality of the first user equipment and communication quality of the second user equipment satisfy a preset threshold in a case in which the second user equipment collaborates with the first user equipment in receiving the first downlink data and the first user equipment collaborates with the second user equipment in receiving the second downlink data; and if the preset threshold is satisfied, the network device may determine that the first user equipment collaborates with the second user equipment in receiving the second downlink data. In this way, the second user equipment can obtain a multiplexing gain or a diversity gain.

It should be noted that the network device may determine, according to the information about the quality of the link between the first and second user equipments , the information about the quality of the link between the first user equipment and the network device, and the information about the quality of the link between the second user equipment and the network device that are previously reported by the first user equipment or the second user equipment, effects on the communication quality of the first and second user equipments after the first user equipment collaborates with the second user equipment and the second user equipment collaborates with the first user equipment. If communication quality of either the first user equipment or the second user equipment does not satisfy the preset threshold or does not reach a predetermined multiplexing gain or diversity gain effect because the first user equipment collaborates with the second user equipment and the second user equipment collaborates with the first user equipment, the first user equipment and the second user equipment may not perform collaborative communication. In this implementation scenario, the network device may change a collaboration relationship, for example, cancel the collaboration of the first user equipment with the second user equipment or cancel the collaboration of the second user equipment with the first user equipment or cancel the two collaborations.

Optionally, based on the foregoing embodiment, after the network device determines, according to the collaboration request, the at least one second user equipment that collaborates with the first user equipment in receiving the first downlink data, the network device may further send a first cell radio network temporary identifier C-RNTI to each second user equipment, so that each second user equipment demodulates control information of the first downlink data according to the first C-RNTI; or the network device sends a first C-RNTI to at least any one of the second user equipments, so that all the second user equipments share the first C-RNTI.

Further, after receiving the first C-RNTI, the second user equipment may demodulate a physical downlink control channel PDCCH of the first user equipment, to acquire control information of the first user equipment, so that the second user equipment sends the second part of the first downlink data to the first user equipment. For example, after demodulating the PDCCH of the second user equipment, the second user equipment may learn a time-frequency resource block occupied by the second part of the first downlink data, learn a reception mode of the first user equipment (for example, whether the reception mode is spatial multiplexing or transmit diversity), and learn control information such as a discontinuous reception DRX configuration. When necessary, the network device may adjust a configuration parameter of the first user equipment or the second user equipment, so that related configuration parameters of the first user equipment and the second user equipment are the same (for example, paging groups are the same, DRXs are the same, and feedback periods feedback period are the same), to implement efficient collaboration between the first user equipment and the second user equipment. Frequency used by the communications link between the first user equipment and the second user equipment may be out-of-band frequency. A specific communication manner may be, for example, performing communication by using a device-to-device D2D communication protocol. The first C-RNTI may be a C-RNTI of the first user equipment or a C-RNTI of the second user equipment or a preset C-RNTI.

In this embodiment, a base station may scramble a control channel by using the C-RNTI of the first user equipment or the C-RNTI of the second user equipment or another preset C-RNTI; therefore, correspondingly, the first C-RNTI sent by the base station to the second user equipment should be the C-RNTI of the first user equipment or the C-RNTI of the second user equipment or the another preset C-RNTI respectively.

According to the method provided in this embodiment, after receiving a collaboration request of first user equipment, a network device may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

FIG. 2 is a flowchart of a method for collaborative communication between user equipments according to another embodiment of the present invention. As shown in FIG. 2, the method in this embodiment may include:

Step 201: First user equipment sends a collaboration request to a network device.
Step 202: The first user equipment receives a first indication message sent by the network device, where the first indication message is used to indicate the first user equipment to receive a first part of first downlink data from the network device and receive a second part of the first downlink data from second user equipment.
Step 203: The first user equipment receives the first part, sent by the network device, of the first downlink data, and receives the second part of the first downlink data from the second user equipment.

Further, the first user equipment may further receive a fourth indication message that is sent by the network device and is used to indicate the first user equipment to forward a second part, received from the network device, of second downlink data to the second user equipment. Alternatively, the first user equipment may further negotiate with the second user equipment in advance, so that the first user equipment receives a second part of second downlink data from the network device and forwards the second part of the second downlink data to the second user equipment.

It should be noted that the first indication message and the fourth indication message may also be a same message, that is, when indicating the first device to forward the second part, received from the network device, of the second downlink data to the second user equipment, the network device may further indicate the first user equipment to receive the first part of the first downlink data from the network device and receive the second part of the first downlink data from the second user equipment.

In this implementation scenario, after receiving the second part, sent by the network device, of the second downlink data, the first user equipment sends the second part of the second downlink data to the second user equipment.

Further, when the second user equipment collaborates with the first user equipment, if the network device determines that the second user equipment is also receiving downlink user data sent by the network device, the first user equipment can also collaborate with the second user equipment at the same time, so that the second user equipment obtains a multiplexing gain or a diversity gain.

Further, after the first user equipment sends the collaboration request to the network device, the first user equipment may further receive a second C-RNTI sent by the network device. The first user equipment may demodulate control information of the second downlink data according to the second C-RNTI.

The first user equipment decodes a PDCCH of the second user equipment by using the second C-RNTI, to acquire control information of the second user equipment, so that the first user equipment sends the second part of the second downlink data to the second user equipment.

Further, the second C-RNTI may be a C-RNTI of the second user equipment or a C-RNTI of the first user equipment or a preset C-RNTI.

According to the method provided in this embodiment, first user equipment may send a collaboration request to a network device, and the network device may determine at least one other user equipment that collaborates with the first user equipment in receiving downlink data, and indicate, to the user equipment by using an indication message, that the downlink data may be received separately by using the network device and another user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

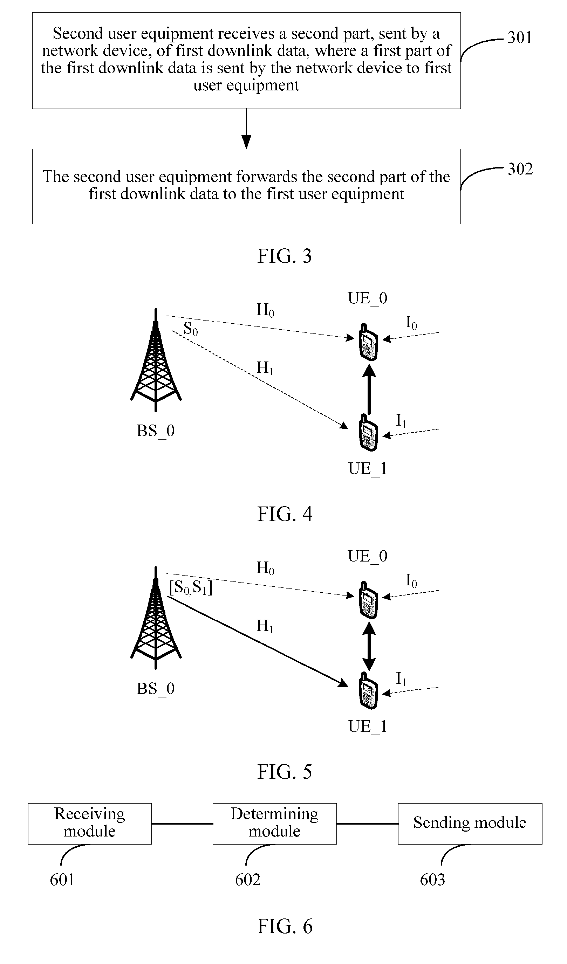

FIG. 3 is a flowchart of a method for collaborative communication between user equipments according to still another embodiment of the present invention. As shown in FIG. 3, the method in this embodiment may include:

Step 301: Second user equipment receives a second part, sent by a network device, of first downlink data, where a first part of the first downlink data is sent by the network device to first user equipment.

Step 302: The second user equipment forwards the second part of the first downlink data to the first user equipment.

As a feasible implementation manner, after determining that the second user equipment collaborates with the first user equipment, the network device may send a second indication message to the second user equipment, where the second indication message is used to indicate the second user equipment to forward the second part, received from the network device, of the first downlink data to the first user equipment. As another feasible implementation manner, the first user equipment may further negotiate with the second user equipment in advance, so that the second user equipment receives the second part of the first downlink data from the network device and forwards the second part of the first downlink data to the first user equipment.

Further, before the second user equipment receives the second part, sent by the network device, of the first downlink data, the second user equipment may further receive a first C-RNTI sent by the network device, and the second user equipment may demodulate control information of the first downlink data according to the first C-RNTI.

The second user equipment decodes a PDCCH of the first user equipment by using the first C-RNTI, to acquire control information of the first user equipment, so that the second user equipment sends the second part of the first downlink data to the first user equipment.

Further, the second user equipment is main user equipment among all user equipments that collaborate with the first user equipment in receiving the first downlink data, and before the second user equipment receives the second part, sent by the network device, of the first downlink data, the second user equipment may further receive the first C-RNTI sent by the network device. The main user equipment may demodulate the control information of the first downlink data according to the first C-RNTI. Optionally, there may be one or more main user equipments among the second user equipments. When there is one main user equipment among the second user equipments, only the one main user equipment demodulates the PDCCH of the first user equipment, and the one main user equipment shares the control information, obtained by means of demodulation, of the first user equipment with the other user equipments among the second user equipments. When there are multiple main user equipments among the second user equipments, the multiple main user equipments all need to demodulate the PDCCH of the first user equipment, and if some main user equipments among the multiple main user equipments fail to receive the first C-RNTI sent by the network device, main user equipment receiving the first C-RNTI needs to share the first C-RNTI with the main user equipments that fail to receive the first C-RNTI.

Further, the first C-RNTI may be a C-RNTI of the first user equipment or a C-RNTI of the second user equipment or a preset C-RNTI.

Optionally, the second user equipment may receive a third indication message sent by the network device, where the third indication message is further used to indicate the second user equipment to receive a first part of second downlink data from the network device and receive a second part of the second downlink data from the first user equipment. Alternatively, the second UE negotiates with the first UE, so that the first user equipment receives a second part of second downlink data from the network device and forwards the second part of the second downlink data to the second user equipment.

According to the method provided in this embodiment, after receiving a collaboration request of first user equipment, a network device may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

The following describes, by using two specific examples, the method for collaborative communication between user equipments that is provided in the present invention. FIG. 4 provides a schematic diagram of a specific implementation manner in which second user equipment collaborates with first user equipment in receiving first downlink data but the first user equipment does not collaborate with the second user equipment. As shown in FIG. 4, a network device, for example, a base station BS_0, needs to send information S0 (which may be multiple layers of information, that is, S0=[s0, s1...sp]T) to first user equipment UE_0. Due to a feature of radio space propagation of downlink data, second user equipment UE_1 can receive downlink data S0 from BS_0. A system model of downlink data reception performed by the first user equipment UE_0 may be described by using the following formulas:

$$\mathbf{Y}_0 = \mathbf{H}_0 \cdot \mathbf{P}_1 \cdot \mathbf{S}_0 + \mathbf{I}_0 + \mathbf{N}_0 ,$$

and

$$\mathbf{Y}_1 = \mathbf{H}_1 \cdot \mathbf{P}_1 \cdot \mathbf{S}_0 + \mathbf{I_1} + \mathbf{N}_1 ,$$

where

Y0 represents downlink data received by the first user equipment UE_0, and Y1 represents downlink data received by the second user equipment UE_1. Hj represents a spatial channel between the base station BS_0 and user equipment j, P1 is a precoding matrix (or vector), I0 and I1 represent interfering downlink data received by the two user equipments in addition to S0, and Nj represents a noise signal received by the user equipment j. In a case in which the user equipments do not collaborate with each other, for UE_1, $\mathbf{H}_1 \cdot \mathbf{P}_1 \cdot \mathbf{S}_0$ is useless (interfering) downlink data, cannot be used, and cannot be provided for use by the first user equipment UE_0.

The second user equipment UE_1 may share, with the other party by means of collaborative communication, the downlink data Y1 received by the second user equipment UE_1. After receiving the information Y1 shared by the second user equipment UE_1, the first user equipment UE_0 may obtain information $\mathbf{H}_1 \cdot \mathbf{P}_1$ by means of channel estimation in demodulation processing performed by the first user equipment UE_0, thereby obtaining the following received data according to the obtained channel information:

$$\mathbf{Y} = \begin{bmatrix} \mathbf{Y}_0 \\ \mathbf{Y}_1 \end{bmatrix} = \begin{bmatrix} \mathbf{H}_0 \\ \mathbf{H}_1 \end{bmatrix} \cdot \mathbf{P}_1\mathbf{S}_0 + \begin{bmatrix} \mathbf{I}_0 \\ \mathbf{I_1} \end{bmatrix} + \begin{bmatrix} \mathbf{N}_0 \\ \mathbf{N}_1 \end{bmatrix}$$

A receiver used at a receive end of the first user equipment is W0, and therefore, an estimated value of S0 can be obtained:

$$\hat{\mathbf{S}}_0 = \mathbf{W}_0 \cdot \mathbf{Y}.$$

The foregoing solution is applicable to a manner for processing received data by the first user equipment when the second user equipment collaborates with the first user equipment. The following solution is applicable to a manner for processing received data by user equipment when the second user equipment collaborates with the first user equipment and the first user equipment collaborates with the second user equipment. This embodiment is mainly applicable to an implementation scenario in which a diversity gain is obtained. In a scenario in which quality of a communications link is not good, user equipment may receive a same data message from different links, thereby improving quality of data reception performed by the user equipment, reducing a bit error rate, achieving a beneficial effect of "transmit diversity", and obtaining a diversity gain. In a one-way collaboration mode, for example, the second user equipment collaborates with the first user equipment, the first user equipment can obtain a diversity gain; in a two-way collaboration mode, for example, the second user equipment collaborates with the first user equipment and the first user equipment collaborates with the second user equipment, both the first and second user equipments can obtain a diversity gain.

FIG. 5 provides a schematic diagram of a specific implementation manner in which second user equipment collaborates with first user equipment in receiving first downlink data and the first user equipment collaborates with the second user equipment in receiving second downlink data. As shown in FIG. 5, a base station BS_0 performs precoding by using a joint channel of two user equipments, and sends multiple data flows in a same time-frequency resource block. Among these data flows, target user equipment of some data flows (S0) is first user equipment UE0, and target user equipment of some data flows (S1) is second user equipment UE1. The two user equipments receive the following data by sharing information:

$$\mathbf{Y} = \begin{bmatrix} \mathbf{Y}_0 \\ \mathbf{Y}_1 \end{bmatrix} = \begin{bmatrix} \mathbf{H}_0 \\ \mathbf{H}_1 \end{bmatrix} \cdot [\mathbf{P}_1, \mathbf{P}_2] \cdot \begin{bmatrix} \mathbf{S}_0 \\ \mathbf{S}_1 \end{bmatrix} + \begin{bmatrix} \mathbf{I}_1 \\ \mathbf{I}_2 \end{bmatrix} + \begin{bmatrix} \mathbf{N}_0 \\ \mathbf{N}_1 \end{bmatrix},$$

where

P1 and P2 are precoding matrixes of S0 and S1. The base station BS_0 may design the precoding matrixes by using some criteria. For example, a precoding matrix is obtained in a manner based on SVD decomposition, which can maximize a data throughput. Assuming that a dimension of a combined channel is NxM, decomposition may be performed as follows:

$$\begin{bmatrix} \mathbf{H}_0 \\ \mathbf{H}_1 \end{bmatrix} = \mathbf{U} \cdot \mathbf{\Sigma} \cdot \mathbf{V},$$

where

dimensions of $\mathbf{U}, \Sigma, \mathbf{V}$ are NxN, NxM, and MxM respectively. P1 and P2 may be selected from the front row of V, for example, if V=[V1, V2, ...VM], P1=[V1, V2...Vn]H and P2=[Vn+1, ...Vk]H, k<=min(M, N).

A receiver used at a receive end of the first user equipment UE_0 is W0, and an estimated value of S0 can be obtained:

$$\hat{\mathbf{S}}_0 = \mathbf{W}_0 \cdot \mathbf{Y}.$$

A receiver used at a receive end of the second user equipment UE_1 is W1, and an estimated value of S1 may be obtained:

$$\hat{\mathbf{S}}_1 = \mathbf{W}_1 \cdot \mathbf{Y}.$$

This embodiment is mainly applicable to an implementation scenario in which a multiplexing gain is obtained. When quality of a communications link is good, user equipment receives different data messages from different links, thereby increasing a channel capacity, achieving a beneficial effect of "spatial multiplexing", and obtaining a multiplexing gain. In a one-way collaboration mode, for example, the second user equipment collaborates with the first user equipment, the first user equipment can obtain a multiplexing gain; in a two-way collaboration mode, for example, the second user equipment collaborates with the first user equipment and the first user equipment collaborates with the second user equipment, both the first and second user equipments can obtain a multiplexing gain.

As optional manners, the manners for processing received data by user equipment that are provided in FIG. 4 and FIG. 5 may be applicable to embodiments of the present invention, and there are other processing manners, which is not limited herein in the present invention.

FIG. 6 is a schematic structural diagram of a network device according to an embodiment of the present invention. The network device includes:

a receiving module 601, configured to receive a collaboration request sent by first user equipment;
a determining module 602, configured to determine, according to the collaboration request received by the receiving module, at least one second user equipment that collaborates with the first user equipment in receiving first downlink data; and
a sending module 603, configured to send a first indication message to the first user equipment, where the first indication message is used to indicate the first user equipment to receive a first part of the first downlink data from the network device and receive a second part of the first downlink data from the second user equipment.

Optionally, the sending module 603 may be further configured to: send a second indication message to the second user equipment, where the second indication message is used to indicate the second user equipment to forward the second part, received from the network device, of the first downlink data to the first user equipment.

Optionally, the determining module 602 is further configured to: after the receiving module receives the collaboration request sent by the first user equipment, determine second downlink data to be sent to the second user equipment; and determine that the first user equipment collaborates with the second user equipment in receiving the second downlink data; and the sending module 603 may be further configured to: send a third indication message to the second user equipment, where the third indication message is used to indicate the second user equipment to receive a first part of the second downlink data from the network device and receive a second part of the second downlink data from the first user equipment.

Optionally, the sending module 603 may be further configured to: send a fourth indication message to the first user equipment, where the fourth indication message is used to indicate the first user equipment to forward the second part, received from the network device, of the second downlink data to the second user equipment.

Optionally, the determining module 602 is specifically configured to: determine whether communication quality of the first user equipment and communication quality of the second user equipment satisfy a preset threshold in a case in which the second user equipment collaborates with the first user equipment in receiving the first downlink data and the first user equipment collaborates with the second user equipment in receiving the second downlink data; and if the preset threshold is satisfied, the network device determines that the first user equipment collaborates with the second user equipment in receiving the second downlink data.

Optionally, the sending module 603 is further configured to: after the determining module determines, according to the collaboration request, the at least one second user equipment that collaborates with the first user equipment in receiving the first downlink data, send a first C-RNTI to each second user equipment, so that each second user equipment demodulates control information of the first downlink data according to the first C-RNTI; or send a first C-RNTI to at least any one of the second user equipments, so that all the second user equipments share the first C-RNTI.

Optionally, the first C-RNTI is a C-RNTI of the first user equipment or a C-RNTI of the second user equipment or a preset C-RNTI.

Optionally, the sending module 603 is further configured to: after the determining module determines that the first user equipment collaborates with the second user equipment in receiving the second downlink data, send a second C-RNTI to the first user equipment, so that the first user equipment demodulates control information of the second downlink data according to the second C-RNTI.

Optionally, the second C-RNTI is a C-RNTI of the second user equipment or a C-RNTI of the first user equipment or a preset C-RNTI.

Optionally, the first part of the first downlink data and the second part of the first downlink data are the same, or the first part of the first downlink data and the second part of the first downlink data are different.

The network device provided in this embodiment of the present invention corresponds to the method embodiment provided in FIG. 1 of the present invention, and executes the method embodiment. Therefore, for a specific process in which the network device executes the method for collaborative communication between user equipments, reference may be made to the method embodiment, and details are not described herein again.

After receiving a collaboration request of first user equipment, the network device provided in this embodiment may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

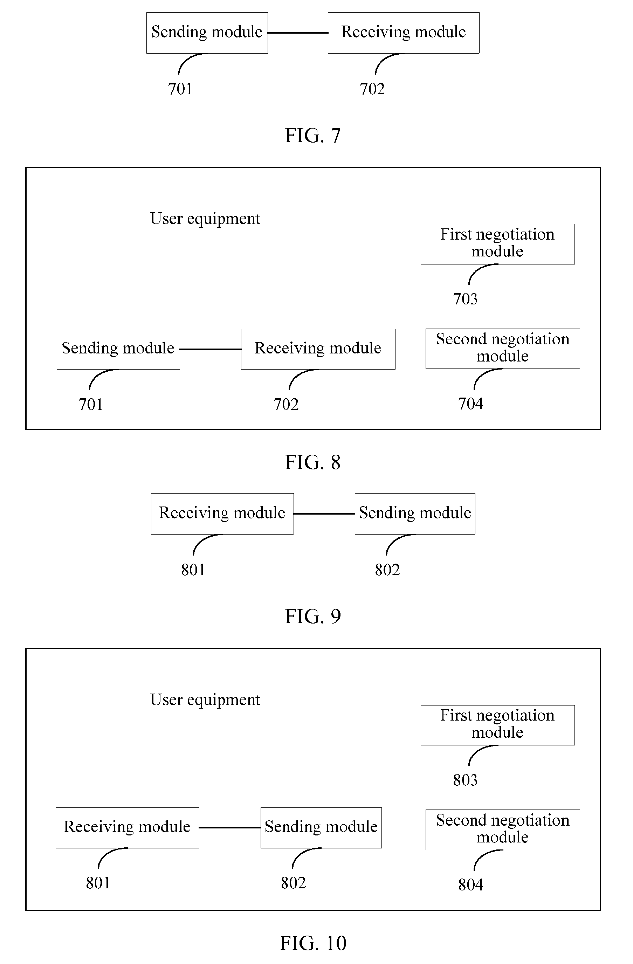

FIG. 7 is a schematic structural diagram of user equipment according to an embodiment of the present invention. The user equipment includes:

a sending module 701, configured to send a collaboration request to a network device; and
a receiving module 702, configured to receive a first indication message sent by the network device, where the first indication message is used to indicate the first user equipment to receive a first part of first downlink data from the network device; and receive the first indication message sent by the network device, where the first indication message is used to indicate the first user equipment to receive the first part of the first downlink data from the network device, where
the receiving module 702 is configured to receive the first part, sent by the network device, of the first downlink data, and receive a second part of the first downlink data from second user equipment.

Optionally, the receiving module 702 is further configured to: receive a fourth indication message sent by the network device, where the fourth indication message is further used to indicate the first user equipment to forward a second part, received from the network device, of second downlink data to the second user equipment.

As shown in FIG. 8, optionally, the user equipment may further include:

a first negotiation module 703, configured to negotiate with the second UE, so that the first user equipment receives a second part of second downlink data from the network device and forwards the second part of the second downlink data to the second user equipment.

Optionally, the receiving module 702 may be further configured to: receive the second part, sent by the network device, of the second downlink data after receiving the first indication message sent by the network device; and the sending module 701 may be further configured to: after the receiving module receives the second part, sent by the network device, of the second downlink data, send the second part of the second downlink data to the second user equipment.

Optionally, the receiving module 702 may be further configured to: after the sending module sends the collaboration request to the network device, receive a second cell radio network temporary identifier C-RNTI sent by the network device; and the receiving module 702 may be specifically configured to: after the receiving module receives the second C-RNTI sent by the network device, demodulate control information of the second downlink data according to the second C-RNTI.

Optionally, the second C-RNTI is a C-RNTI of the second user equipment or a C-RNTI of the first user equipment or a preset C-RNTI.

Optionally, the user equipment may further include:

a second negotiation module 704, configured to negotiate with the second UE, so that the second user equipment receives the second part of the first downlink data from the network device and forwards the second part of the first downlink data to the first user equipment.

The user equipment provided in this embodiment of the present invention corresponds to the method embodiment provided in FIG. 2 of the present invention, and executes the method embodiment. Therefore, for a specific process in which the user equipment executes the method for collaborative communication between user equipments, reference may be made to the method embodiment, and details are not described herein again.

The user equipment provided in this embodiment may send a collaboration request to a network device, and the network device may determine at least one other user equipment that collaborates with the user equipment in receiving downlink data, and indicate, to the user equipment by using an indication message, that the downlink data may be received separately by using the network device and second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

FIG. 9 is a schematic structural diagram of user equipment according to another embodiment of the present invention. The user equipment includes:

a receiving module 801, configured to receive a second part, sent by a network device, of first downlink data, where a first part of the first downlink data is sent by the network device to first user equipment; and
a sending module 802, configured to forward the second part of the first downlink data to the first user equipment.

Optionally, the receiving module 801 is further configured to receive a second indication message sent by the network device, where the second indication message is used to indicate the second user equipment to forward the second part, received from the network device, of the first downlink data to the first user equipment.

As shown in FIG. 10, the user equipment may further include:

a first negotiation module 803, configured to negotiate with the first UE, so that the second user equipment receives the second part of the first downlink data from the network device and forwards the second part of the first downlink data to the first user equipment.

Optionally, the receiving module 801 may be further configured to: before receiving the second part, sent by the network device, of the first downlink data, receive a first cell radio network temporary identifier C-RNTI sent by the network device; and demodulate control information of the first downlink data according to the first C-RNTI.

Optionally, the first C-RNTI is a C-RNTI of the first user equipment or a C-RNTI of the second user equipment or a preset C-RNTI.

Optionally, the receiving module 801 may be further configured to: receive a third indication message sent by the network device, where the third indication message is further used to indicate the second user equipment to receive a first part of second downlink data from the network device and receive a second part of the second downlink data from the first user equipment.

Optionally, after the receiving module 801 receives the third indication message sent by the network device, the receiving module is further configured to: receive the first part of the second downlink data from the network device, and receive the second part of the second downlink data from the first user equipment.

Optionally, the user equipment may further include: a second negotiation module 804, configured to negotiate with the first UE, so that the first user equipment receives the second part of the second downlink data from the network device and forwards the second part of the second downlink data to the second user equipment.

The user equipment provided in this embodiment of the present invention corresponds to the method embodiment provided in FIG. 3 of the present invention, and executes the method embodiment. Therefore, for a specific process in which the user equipment executes the method for collaborative communication between user equipments, reference may be made to the method embodiment, and details are not described herein again.

The user equipment provided in this embodiment is an assistant device, and after receiving a collaboration request of first user equipment, a network device may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

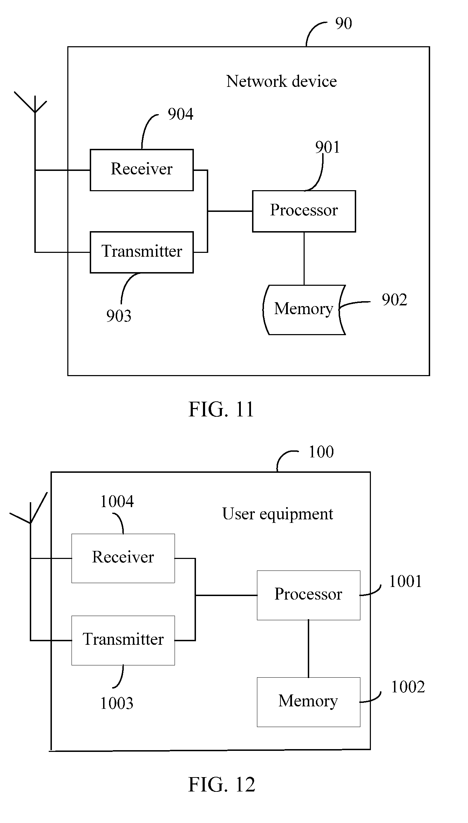

FIG. 11 is a schematic structural diagram of a network device according to another embodiment of the present invention. The network device includes:

As shown in FIG. 11, a network device 90 provided in this embodiment includes a processor 901 and a memory 902. The network device 90 may further include a transmitter 903 and a receiver 904. The transmitter 903 and the receiver 904 may be connected to the processor 901. The transmitter 903 is configured to send data or information, the receiver 904 is configured to receive data or information, and the memory 902 stores an execution instruction. When the network device 90 runs, the processor 901 communicates with the memory 902, and the processor 901 invokes the execution instruction in the memory 902, so as to perform the following operations:

receiving a collaboration request sent by first user equipment; determining, according to the collaboration request, at least one second user equipment that collaborates with the first user equipment in receiving first downlink data; and sending a first indication message to the first user equipment, where the first indication message is used to indicate the first user equipment to receive a first part of the first downlink data from the network device and receive a second part of the first downlink data from the second user equipment.

Optionally, after the determining the at least one second user equipment that collaborates with the first user equipment in receiving the first downlink data, the following may be further performed: sending a second indication message to the second user equipment, where the second indication message is used to indicate the second user equipment to forward the second part, received from the network device, of the first downlink data to the first user equipment.

Optionally, the following may be further performed: determining second downlink data to be sent to the second user equipment; determining that the first user equipment collaborates with the second user equipment in receiving the second downlink data; and sending a third indication message to the second user equipment, where the third indication message is used to indicate the second user equipment to receive a first part of the second downlink data from the network device and receive a second part of the second downlink data from the first user equipment.

Optionally, after the determining that the first user equipment collaborates with the second user equipment in receiving the second downlink data, the following may be further performed: sending a fourth indication message to the first user equipment, where the fourth indication message is used to indicate the first user equipment to forward the second part, received from the network device, of the second downlink data to the second user equipment.

Optionally, the determining that the first user equipment collaborates with the second user equipment in receiving the second downlink data may be specifically: determining whether communication quality of the first user equipment and communication quality of the second user equipment satisfy a preset threshold in a case in which the second user equipment collaborates with the first user equipment in receiving the first downlink data and the first user equipment collaborates with the second user equipment in receiving the second downlink data; and if the preset threshold is satisfied, determining that the first user equipment collaborates with the second user equipment in receiving the second downlink data.

Optionally, after the determining the at least one second user equipment that collaborates with the first user equipment in receiving the first downlink data, the following may be further performed: sending a first cell radio network temporary identifier C-RNTI to each second user equipment, so that each second user equipment demodulates control information of the first downlink data according to the first C-RNTI; or sending a first C-RNTI to at least any one of the second user equipments, so that all the second user equipments share the first C-RNTI.

Optionally, the first C-RNTI is a C-RNTI of the first user equipment or a C-RNTI of the second user equipment or a preset C-RNTI.

Optionally, after the determining that the first user equipment collaborates with the second user equipment in receiving the second downlink data, the following may be further performed: sending a second C-RNTI to the first user equipment, so that the first user equipment demodulates control information of the second downlink data according to the second C-RNTI.

Optionally, the second C-RNTI is a C-RNTI of the second user equipment or a C-RNTI of the first user equipment or a preset C-RNTI.

Optionally, the first part of the first downlink data and the second part of the first downlink data are the same, or the first part of the first downlink data and the second part of the first downlink data are different.

The network device provided in this embodiment of the present invention corresponds to the method embodiment provided in FIG. 1 of the present invention, and executes the method embodiment. Therefore, for a specific process in which the network device executes the method for collaborative communication between user equipments, reference may be made to the method embodiment, and details are not described herein again.

After receiving a collaboration request of first user equipment, the network device provided in this embodiment may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

FIG. 12 is a schematic structural diagram of user equipment according to still another embodiment of the present invention. As shown in FIG. 12, user equipment 100 provided in this embodiment includes a processor 1001 and a memory 1002. The user equipment 100 may further include a transmitter 1003 and a receiver 1004. The transmitter 1003 and the receiver 1004 may be connected to the processor 1001. The transmitter 1003 is configured to send data or information, the receiver 1004 is configured to receive data or information, and the memory 1002 stores an execution instruction. When the user equipment 100 runs, the processor 1001 communicates with the memory 1002, and the processor 1001 invokes the execution instruction in the memory 1002, so as to perform the following operations:

sending a collaboration request to a network device; receiving a first indication message sent by the network device, where the first indication message is used to indicate the first user equipment to receive a first part of first downlink data from the network device and receive a second part of the first downlink data from second user equipment; and receiving the first part, sent by the network device, of the first downlink data, and receiving the second part of the first downlink data from the second user equipment.

Optionally, the following may be further performed: receiving a fourth indication message sent by the network device, where the fourth indication message is used to indicate the first user equipment to forward a second part, received from the network device, of second downlink data to the second user equipment.

Optionally, the following may be further performed: negotiating with the second UE, so that the first user equipment receives a second part of second downlink data from the network device and forwards the second part of the second downlink data to the second user equipment.

Optionally, the following may be further performed: receiving the second part, sent by the network device, of the second downlink data; and sending the second part of the second downlink data to the second user equipment.

After the sending a collaboration request to a network device, the following may be further performed: receiving a second C-RNTI sent by the network device; and demodulating control information of the second downlink data according to the second C-RNTI.

Optionally, the second C-RNTI is a C-RNTI of the second user equipment or a C-RNTI of the first user equipment or a preset C-RNTI.

Optionally, the following may be further performed: negotiating with the second UE, so that the second user equipment receives the second part of the first downlink data from the network device and forwards the second part of the first downlink data to the first user equipment.

The user equipment provided in this embodiment of the present invention corresponds to the method embodiment provided in FIG. 2 of the present invention, and executes the method embodiment. Therefore, for a specific process in which the user equipment executes the method for collaborative communication between user equipments, reference may be made to the method embodiment, and details are not described herein again.

The user equipment provided in this embodiment may send a collaboration request to a network device, and the network device may determine, for the user equipment, at least one other second user equipment that collaborates with the user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

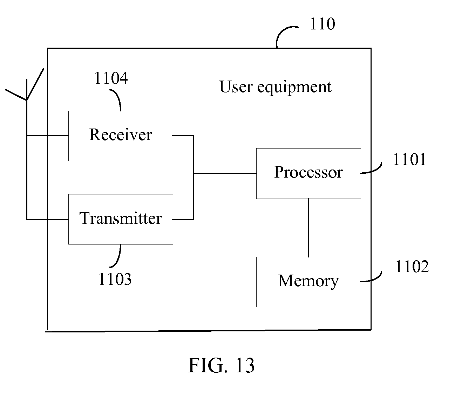

FIG. 13 is a schematic structural diagram of user equipment according to yet another embodiment of the present invention. As shown in FIG. 13, user equipment 110 provided in this embodiment includes a processor 1101 and a memory 1102. The user equipment 110 may further include a transmitter 1103 and a receiver 1104. The transmitter 1103 and the receiver 1104 may be connected to the processor 1101. The transmitter 1103 is configured to send data or information, the receiver 1104 is configured to receive data or information, and the memory 1102 stores an execution instruction. When the user equipment 110 runs, the processor 1101 communicates with the memory 1102, and the processor 1101 invokes the execution instruction in the memory 1102, so as to perform the following operations:

receiving a second part, sent by a network device, of first downlink data, where a first part of the first downlink data is sent by the network device to first user equipment; and forwarding the second part of the first downlink data to the first user equipment.

Optionally, before receiving the second part, sent by the network device, of the first downlink data, the user equipment may further receive a second indication message sent by the network device, where the second indication message is used to indicate the second user equipment to forward the second part, received from the network device, of the first downlink data to the first user equipment.

Optionally, before receiving the second part, sent by the network device, of the first downlink data, the user equipment may further negotiate with the first UE, so that the second user equipment receives the second part of the first downlink data from the network device and forwards the second part of the first downlink data to the first user equipment.

Optionally, before receiving the second part, sent by the network device, of the first downlink data, the user equipment may further receive a first cell radio network temporary identifier C-RNTI sent by the network device; and demodulate control information of the first downlink data according to the first C-RNTI.

Optionally, the user equipment is main user equipment among all user equipments that collaborate with the first user equipment in receiving the first downlink data, and before receiving the second part, sent by the network device, of the first downlink data, the user equipment may further receive the first C-RNTI sent by the network device; and the main equipment demodulates the control information of the first downlink data according to the first C-RNTI.

Optionally, the first C-RNTI is a C-RNTI of the first user equipment or a C-RNTI of the second user equipment or a preset C-RNTI.

Optionally, the user equipment may further receive a third indication message sent by the network device, where the third indication message is further used to indicate the second user equipment to receive a first part of second downlink data from the network device and receive a second part of the second downlink data from the first user equipment.

Optionally, after receiving the third indication message sent by the network device, the user equipment may further receive the first part of the second downlink data from the network device, and receive the second part of the second downlink data from the first user equipment.

Before receiving the second part of the second downlink data from the first user equipment, the user equipment may further negotiate with the first UE, so that the first user equipment receives the second part of the second downlink data from the network device and forwards the second part of the second downlink data to the second user equipment.

The user equipment provided in this embodiment of the present invention corresponds to the method embodiment provided in FIG. 3 of the present invention, and executes the method embodiment. Therefore, for a specific process in which the user equipment executes the method for collaborative communication between user equipments, reference may be made to the method embodiment, and details are not described herein again.

The user equipment provided in this embodiment is a collaborating device, and after receiving a collaboration request of first user equipment, a network device may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

The present invention further provides an embodiment of a system for collaborative communication between user equipments, including the network device shown in FIG. 6, the first user equipment shown in FIG. 7 or FIG. 8, and the second user equipment FIG. 9 or FIG. 10.

The present invention further provides an embodiment of another system for collaborative communication between user equipments, including the network device shown in FIG. 11, the first user equipment shown in FIG. 12, and the second user equipment FIG. 13.

For each device in the system provided in the foregoing embodiments, reference may be made to a related description in the foregoing device embodiments, and details are not described herein again.

According to the system for collaborative communication between user equipments provided in this embodiment of the present invention, after receiving a collaboration request of first user equipment, a network device may determine, for the user equipment, at least one other second user equipment that collaborates with the first user equipment in receiving downlink data, and indicate, to the first user equipment by using an indication message, that the downlink data may be received separately by using the network device and the second user equipment. In this way, on a premise that a quantity of physical antennas of user equipment is not increased, quality of data reception performed by the user equipment can be improved, a bit error rate can be reduced, and a diversity gain can be obtained. In addition, a channel capacity can be increased, a beneficial effect of "spatial multiplexing" can be achieved, and a multiplexing gain can be obtained.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A method for collaborative communication between user equipments, comprising:

    receiving, by a network device, a collaboration request sent by first user equipment;

determining, by the network device according to the collaboration request, at least one second user equipment that collaborates with the first user equipment in receiving first downlink data; and

sending, by the network device, a first indication message to the first user equipment, wherein the first indication message is used to indicate the first user equipment to receive a first part of the first downlink data from the network device and receive a second part of the first downlink data from the second user equipment.

2. The method according to claim 1, wherein after the determining, by the network device according to the collaboration request, at least one second user equipment that collaborates with the first user equipment in receiving first downlink data, the method further comprises:

sending, by the network device, a second indication message to the second user equipment, wherein the second indication message is used to indicate the second user equipment to forward the second part, received from the network device, of the first downlink data to the first user equipment.

3. The method according to claim 1 or 2, further comprising:

determining, by the network device, second downlink data to be sent to the second user equipment; determining, by the network device, that the first user equipment collaborates with the second user equipment in receiving the second downlink data; and

sending, by the network device, a third indication message to the second user equipment, wherein the third indication message is used to indicate the second user equipment to receive a first part of the second downlink data from the network device and receive a second part of the second downlink data from the first user equipment.

4. The method according to claim 3, wherein after the determining, by the network device, that the first user equipment collaborates with the second user equipment in receiving the second downlink data, the method further comprises:

sending, by the network device, a fourth indication message to the first user equipment, wherein the fourth indication message is used to indicate the first user equipment to forward the second part, received from the network device, of the second downlink data to the second user equipment.

5. The method according to claim 3, wherein the determining, by the network device, that the first user equipment collaborates with the second user equipment in receiving the second downlink data specifically comprises:

determining, by the network device, whether communication quality of the first user equipment and communication quality of the second user equipment satisfy a preset threshold in a case in which the second user equipment collaborates with the first user equipment in receiving the first downlink data and the first user equipment collaborates with the second user equipment in receiving the second downlink data; and

if the preset threshold is satisfied, determining, by the network device, that the first user equipment collaborates with the second user equipment in receiving the second downlink data.

6. The method according to any one of claims 1 to 5, wherein after the determining, by the network device according to the collaboration request, at least one second user equipment that collaborates with the first user equipment in receiving first downlink data, the method further comprises:

sending, by the network device, a first cell radio network temporary identifier C-RNTI to each second user equipment, so that each second user equipment demodulates control information of the first downlink data according to the first C-RNTI; or

sending, by the network device, the first C-RNTI to at least any one of the second user equipments, so that all the second user equipments share the first C-RNTI.

7. The method according to claim 6, wherein the first C-RNTI is a C-RNTI of the first user equipment or a C-RNTI of the second user equipment or a preset C-RNTI.

8. The method according to claim 3, wherein after the determining, by the network device, that the first user equipment collaborates with the second user equipment in receiving the second downlink data, the method further comprises:

sending, by the network device, a second C-RNTI to the first user equipment, so that the first user equipment demodulates control information of the second downlink data according to the second C-RNTI.

9. The method according to claim 8, wherein the second C-RNTI is a C-RNTI of the second user equipment or a C-RNTI of the first user equipment or a preset C-RNTI.

10. The method according to any one of claims 1 to 9, wherein the first part of the first downlink data and the second part of the first downlink data are the same, or the first part of the first downlink data and the second part of the first downlink data are different.

11. A method for collaborative communication between user equipments, comprising:

sending, by first user equipment, a collaboration request to a network device;
receiving, by the first user equipment, a first indication message sent by the network device, wherein the first indication message is used to indicate the first user equipment to receive a first part of the first downlink data from the network device and receive a second part of the first downlink data from second user equipment; and
receiving, by the first user equipment, the first part, sent by the network device, of the first downlink data, and receiving the second part of the first downlink data from the second user equipment.

12. The method according to claim 11, wherein the method further comprises:

receiving, by the first user equipment, a fourth indication message sent by the network device, wherein the fourth indication message is used to indicate the first user equipment to forward a second part, received from the network device, of second downlink data to the second user equipment.

13. The method according to claim 11, wherein the method further comprises:

negotiating, by the first user equipment, with the second user equipment, so that the first user equipment receives a second part of second downlink data from the network device and forwards the second part of the second downlink data to the second user equipment.

14. The method according to claim 12 or 13, wherein the method further comprises:

receiving, by the first user equipment, the second part, sent by the network device, of the second downlink data; and
sending, by the first user equipment, the second part of the second downlink data to the second user equipment.

15. The method according to claim 14, wherein after the sending, by first user equipment, a collaboration request to a network device, the method further comprises:

receiving, by the first user equipment, a second C-RNTI sent by the network device; and
demodulating, by the first user equipment, control information of the second downlink data according to the second C-RNTI.

16. The method according to claim 15, wherein the second C-RNTI is a C-RNTI of the second user equipment or a C-RNTI of the first user equipment or a preset C-RNTI.

17. The method according to any one of claims 11 to 16, wherein the method further comprises:

negotiating, by the first user equipment, with the second user equipment, so that the second user equipment receives the second part of the first downlink data from the network device and forwards the second part of the first downlink data to the first user equipment.

18. A method for collaborative communication between user equipments, comprising:

receiving, by second user equipment, a second part, sent by a network device, of first downlink data, wherein a first part of the first downlink data is sent by the network device to first user equipment; and
forwarding, by the second user equipment, the second part of the first downlink data to the first user equipment.

19. The method according to claim 18, wherein before the receiving, by second user equipment, a second part, sent by a network device, of first downlink data, the method further comprises:

receiving, by the second user equipment, a second indication message sent by the network device, wherein the second indication message is used to indicate the second user equipment to forward the second part, received from the network device, of the first downlink data to the first user equipment.

20. The method according to claim 18, wherein before the receiving, by second user equipment, a second part, sent by a network device, of first downlink data, the method further comprises:

negotiating, by the second user equipment, with the first user equipment, so that the second user equipment receives the second part of the first downlink data from the network device and forwards the second part of the first downlink data to the first user equipment.

21. The method according to any one of claims 18 to 20, wherein before the receiving, by the second user equipment, a second part, sent by the network device, of the first downlink data, the method further comprises:

receiving, by the second user equipment, a first cell radio network temporary identifier C-RNTI sent by the network device; and
demodulating, by the second user equipment, control information of the first downlink data according to the first C-RNTI.

22. The method according to claim 21, wherein the second user equipment is main user equipment among all user equipments that collaborate with the first user equipment in receiving the first downlink data, and before the receiving, by second user equipment, a second part, sent by the network device, of the first downlink data, the method further comprises:

receiving, by the second user equipment, the first C-RNTI sent by the network device; and
demodulating, by the main user equipment, the control information of the first downlink data according to the first C-RNTI.

23. The method according to claim 21 or 22, wherein the first C-RNTI is a C-RNTI of the first user equipment or a C-RNTI of the second user equipment or a preset C-RNTI.

24. The method according to any one of claims 18 to 23, wherein the method further comprises:

receiving, by the second user equipment, a third indication message sent by the network device, wherein the third indication message is further used to indicate the second user equipment to receive a first part of second downlink data from the network device and receive a second part of the second downlink data from the first user equipment.

25. The method according to claim 24, wherein after the receiving, by the second user equipment, a third indication message sent by the network device, the method further comprises:

receiving, by the second user equipment, the first part of the second downlink data from the network device, and receiving the second part of the second downlink data from the first user equipment.

26. The method according to claim 24 or 25, wherein before the receiving the second part of the second downlink data from the first user equipment, the method further comprises:

negotiating, by the second user equipment, with the first user equipment, so that the first user equipment receives the second part of the second downlink data from the network device and forwards the second part of the second downlink data to the second user equipment.

27. A network device for collaborative communication between user equipments, comprising:

a receiving module, configured to receive a collaboration request sent by first user equipment;
a determining module, configured to determine, according to the collaboration request received by the receiving module, at least one second user equipment that collaborates with the first user equipment in receiving first downlink data; and
a sending module, configured to send a first indication message to the first user equipment, wherein the first indication message is used to indicate the first user equipment to receive a first part of the first downlink data from the network device and receive a second part of the first downlink data from the second user equipment.

**28.** The network device according to claim 27, wherein the sending module is further configured to: send a second indication message to the second user equipment, wherein the second indication message is used to indicate the second user equipment to forward the second part, received from the network device, of the first downlink data to the first user equipment.

**29.** The network device according to claim 27 or 28, wherein the determining module is further configured to: after the receiving module receives the collaboration request sent by the first user equipment, determine second downlink data to be sent to the second user equipment; and determine that the first user equipment collaborates with the second user equipment in receiving the second downlink data; and the sending module is further configured to: send a third indication message to the second user equipment, wherein the third indication message is used to indicate the second user equipment to receive a first part of the second downlink data from the network device and receive a second part of the second downlink data from the first user equipment.

**30.** The network device according to claim 29, wherein the sending module is further configured to: send a fourth indication message to the first user equipment, wherein the fourth indication message is used to indicate the first user equipment to forward the second part, received from the network device, of the second downlink data to the second user equipment.

**31.** The network device according to claim 30, wherein the determining module is specifically configured to: determine whether communication quality of the first user equipment and communication quality of the second user equipment satisfy a preset threshold in a case in which the second user equipment collaborates with the first user equipment in receiving the first downlink data and the first user equipment collaborates with the second user equipment in receiving the second downlink data; and if the preset threshold is satisfied, the network device determines that the first user equipment collaborates with the second user equipment in receiving the second downlink data.

**32.** The network device according to any one of claims 27 to 31, wherein the sending module is further configured to: after the determining module determines, according to the collaboration request, the at least one second user equipment that collaborates with the first user equipment in receiving the first downlink data, send a first cell radio network temporary identifier C-RNTI to each second user equipment, so that each second user equipment demodulates control information of the first downlink data according to the first C-RNTI; or send the first C-RNTI to at least any one of the second user equipments, so that all the second user equipments share the first C-RNTI.

**33.** The network device according to claim 32, wherein the first C-RNTI is a C-RNTI of the first user equipment or a C-RNTI of the second user equipment or a preset C-RNTI.

**34.** The network device according to claim 29, wherein the sending module is further configured to: after the determining module determines that the first user equipment collaborates with the second user equipment in receiving the second downlink data, send a second C-RNTI to the first user equipment, so that the first user equipment demodulates control information of the second downlink data according to the second C-RNTI.

**35.** The network device according to claim 34, wherein the second C-RNTI is a C-RNTI of the second user equipment or a C-RNTI of the first user equipment or a preset C-RNTI.

**36.** The network device according to claims 27 to 35, wherein the first part of the first downlink data and the second part of the first downlink data are the same, or the first part of the first downlink data and the second part of the first downlink data are different.

**37.** User equipment, comprising:

a sending module, configured to send a collaboration request to a network device; and
a receiving module, configured to receive a first indication message sent by the network device, wherein the first indication message is used to indicate the first user equipment to receive a first part of the first downlink data from the network device; and receive the first indication message sent by the network device, wherein the first indication message is used to indicate the first user equipment to receive the first part of the first downlink data from the network device, wherein

the receiving module is further configured to receive the first part, sent by the network device, of the first downlink data, and receive a second part of the first downlink data from second user equipment.

38. The user equipment according to claim 37, wherein the receiving module is further configured to: receive a fourth indication message sent by the network device, wherein the fourth indication message is further used to indicate the first user equipment to forward a second part, received from the network device, of second downlink data to the second user equipment.

39. The user equipment according to claim 37, further comprising:

   a first negotiation module, configured to negotiate with the second user equipment, so that the first user equipment receives a second part of second downlink data from the network device and forwards the second part of the second downlink data to the second user equipment.

40. The user equipment according to claim 38 or 39, wherein the receiving module is further configured to: receive the second part, sent by the network device, of the second downlink data after receiving the first indication message sent by the network device; and the sending module is further configured to: after the receiving module receives the second part, sent by the network device, of the second downlink data, send the second part of the second downlink data to the second user equipment.

41. The user equipment according to claim 40, wherein the receiving module is further configured to: after the sending module sends the collaboration request to the network device, receive a second cell radio network temporary identifier C-RNTI sent by the network device; and the receiving module is specifically configured to: after the receiving module receives the second C-RNTI sent by the network device, demodulate control information of the second downlink data according to the second C-RNTI.

42. The user equipment according to claim 41, wherein the second C-RNTI is a C-RNTI of the second user equipment or a C-RNTI of the first user equipment or a preset C-RNTI.

43. The user equipment according to any one of claims 37 to 42, further comprising:

   a second negotiation module, configured to negotiate with the second user equipment, so that the second user equipment receives the second part of the first downlink data from the network device and forwards the second part of the first downlink data to the first user equipment.

44. User equipment, comprising:

   a receiving module, configured to receive a second part, sent by a network device, of first downlink data, wherein a first part of the first downlink data is sent by the network device to first user equipment; and
   a sending module, configured to forward the second part of the first downlink data to the first user equipment.

45. The user equipment according to claim 44, wherein the receiving module is further configured to receive a second indication message sent by the network device, wherein the second indication message is used to indicate the second user equipment to forward the second part, received from the network device, of the first downlink data to the first user equipment.

46. The user equipment according to claim 44, further comprising:

   a first negotiation module, configured to negotiate with the first user equipment, so that the second user equipment receives the second part of the first downlink data from the network device and forwards the second part of the first downlink data to the first user equipment.

47. The user equipment according to any one of claims 44 to 46, wherein the receiving module is further configured to: before receiving the second part, sent by the network device, of the first downlink data, receive a first cell radio network temporary identifier C-RNTI sent by the network device; and demodulate control information of the first downlink data according to the first C-RNTI.

48. The user equipment according to claim 47, wherein the first C-RNTI is a C-RNTI of the first user equipment or a C-RNTI of the second user equipment or a preset C-RNTI.

49. The user equipment according to any one of claims 44 to 48, wherein the receiving module is further configured to: receive a third indication message sent by the network device, wherein the third indication message is further used to indicate the second user equipment to receive a first part of second downlink data from the network device and receive a second part of the second downlink data from the first user equipment.

50. The user equipment according to claim 49, wherein after the receiving module receives the third indication message sent by the network device, the receiving module is further configured to: receive the first part of the second downlink data from the network device, and receive the second part of the second downlink data from the first user equipment.

51. The user equipment according to claim 49 or 50, further comprising:

a second negotiation module, configured to negotiate with the first user equipment, so that the first user equipment receives the second part of the second downlink data from the network device and forwards the second part of the second downlink data to the second user equipment.

52. A network device, comprising: a processor and a memory, wherein the memory stores an execution instruction, and when the network device runs, the processor communicates with the memory, and the processor executes the execution instruction, so that the base station executes the method according to any one of clams 1 to 10.

53. User equipment, comprising: a processor and a memory, wherein the memory stores an execution instruction, and when the user equipment runs, the processor communicates with the memory, and the processor executes the execution instruction, so that the user equipment executes the method according to any one of clams 11 to 17.

54. User equipment, comprising: a processor and a memory, wherein the memory stores an execution instruction, and when the user equipment runs, the processor communicates with the memory, and the processor executes the execution instruction, so that the user equipment executes the method according to any one of clams 18 to 26.

55. A system for collaborative communication between user equipments, comprising the network device according to any one of claims 27 to 36, the first user equipment according to any one of claims 37 to 43, and the second user equipment according to any one of claims 44 to 51.

56. A system for collaborative communication between user equipments, comprising the network device according to claim 52, the first user equipment according to claim 53, and the second user equipment according to claim 54.

A network device receives a collaboration request sent by first user equipment

101

The network device determines, according to the collaboration request, at least one second user equipment that collaborates with the first user equipment in receiving first downlink data

102

The network device sends a first indication message to the first user equipment, where the first indication message is used to instruct the first user equipment to receive a first part of the first downlink data from the network device and receive a second part of the first downlink data from the second user equipment

103

FIG. 1

First user equipment sends a collaboration request to a network device

201

The first user equipment receives a first indication message sent by the network device, where the first indication message is used to instruct the first user equipment to receive a first part of first downlink data from the network device and receive a second part of the first downlink data from second user equipment

202

The first user equipment receives the first part, sent by the network device, of the first downlink data, and receives the second part of the first downlink data from the second user equipment

203

FIG. 2

Second user equipment receives a second part, sent by a network device, of first downlink data, where a first part of the first downlink data is sent by the network device to first user equipment — 301

The second user equipment forwards the second part of the first downlink data to the first user equipment — 302

FIG. 3

FIG. 4

FIG. 5

| Receiving module | Determining module | Sending module |

601        602        603

FIG. 6

Sending module —————— Receiving module

701 702

**FIG. 7**

User equipment

First negotiation module

703

Sending module —————— Receiving module

Second negotiation module

701 702 704

**FIG. 8**

Receiving module —————— Sending module

801 802

**FIG. 9**

User equipment

First negotiation module

803

Receiving module —————— Sending module

Second negotiation module

801 802 804

**FIG. 10**

90

Network device

904

Receiver

901

Processor

Transmitter

Memory

902

903

FIG. 11

100

1004

User equipment

Receiver

Processor

1001

Transmitter

Memory

1002

1003

FIG. 12

110

1104

User equipment

Receiver

Processor — 1101

Transmitter

1103

Memory — 1102

FIG. 13

# INTERNATIONAL SEARCH REPORT

| International application No. |
| --- |
| PCT/CN2014/070218 |

**A. CLASSIFICATION OF SUBJECT MATTER**

H04W 88/04 (2009.01) i

According to International Patent Classification (IPC) or to both national classification and IPC

**B. FIELDS SEARCHED**

Minimum documentation searched (classification system followed by classification symbols)

H04W, H04L, H04B

Documentation searched other than minimum documentation to the extent that such documents are included in the fields searched

Electronic data base consulted during the international search (name of data base and, where practicable, search terms used)

CNTXT; CNABS; VEN: base station, second, data, part, combine, converge, divide, different, subset, communication quality, quality of service, comp, request, UE, BS, cooperat???, QoS, downlink, relay???, user equipment, terminal

**C. DOCUMENTS CONSIDERED TO BE RELEVANT**

| Category* | Citation of document, with indication, where appropriate, of the relevant passages | Relevant to claim No. |
| --- | --- | --- |
| Y | CN 101471754 A (HUAWEI TECHNOLOGIES CO., LTD.), 01 July 2009 (01.07.2009), description, page 3, line 9 to page 4, line 8, and page 5, line 20 to page 6, line 11 | 1-10, 11-17, 27-43, 52, 53, 55, 56 |
| Y | CN 101047423 A (HUAWEI TECHNOLOGIES CO., LTD.), 03 October 2007 (03.10.2007), description, page 10, paragraphs 4-6, and figure 10 | 1-10, 11-17, 27-43, 52, 53, 55, 56 |
| Y | CN 102780993 A (HARBIN INSTITUTE OF TECHNOLOGY), 14 November 2012 (14.11.2012), description, paragraph [0033] | 5, 31, 52, 55, 56 |
| X | CN 101471754 A (HUAWEI TECHNOLOGIES CO., LTD.), 01 July 2009 (01.07.2009), description, page 10, paragraphs 4-6, and figure 10 | 18-26, 44-51, 54 |
| A | CN 101341672 A (KYOCERA CORP.), 07 January 2009 (07.01.2009), the whole document | 1-56 |

☐ Further documents are listed in the continuation of Box C.     ☒ See patent family annex.

| | |
| --- | --- |
|   *    Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 September 2014 (26.09.2014) | **14 October 2014 (14.10.2014)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LIU, Yuan**<br><br>Telephone No.: (86-10) **62089149** |

Form PCT/ISA/210 (second sheet) (July 2009)

## INTERNATIONAL SEARCH REPORT
### Information on patent family members

International application No.

**PCT/CN2014/070218**

| Patent Documents referred in the Report | Publication Date | Patent Family | Publication Date |
|---|---|---|---|
| CN 101471754 A | 01 July 2009 | CN 101471754 B | 04 July 2012 |
| CN 101047423 A | 03 October 2007 | CN 101047423 B | 11 January 2012 |
| CN 102780993 A | 14 November 2012 | None | |
| CN 101341672 A | 07 January 2009 | JP 4791378 B2 | 12 October 2011 |
| | | WO 2006064804 A1 | 22 June 2006 |
| | | KR 20070086773 A | 27 August 2007 |
| | | US 2010056161 A1 | 04 March 2010 |
| | | US 8090311 B2 | 03 January 2012 |
| | | CN 101341672 B | 01 June 2011 |
| | | JPWO 2006064804 S | 12 June 2008 |

Form PCT/ISA/210 (patent family annex) (July 2009)